**Europäisches Patentamt**

**European Patent Office**

**Office européen des brevets**

(19)

(11) Publication number: **0 202 091**

**A2**

(12) # EUROPEAN PATENT APPLICATION

(21) Application number: **86303575.4**

(22) Date of filing: **12.05.86**

(51) Int. Cl.⁴: **B 23 B 31/04**

(30) Priority: **14.05.85 GB 8512126**

(43) Date of publication of application:
**20.11.86 Bulletin 86/47**

(84) Designated Contracting States:
**AT BE CH DE FR GB IT LI LU NL SE**

(71) Applicant: **UNITURN ENGINEERING COMPANY LIMITED**
**4 Short Street Stockingford**
**Nuneaton Warwickshire, CV10 8JF(GB)**

(72) Inventor: **Charles, Donovan**
**90 Oakdene Crescent**
**Nuneaton Warwickshire, CV10 ODU(GB)**

(74) Representative: **Cowan, David Robert et al,**
**WALFORD AND HARDMAN BROWN Trinity House Hales Street**
**Coventry CV1 1NP West Midlands(GB)**

(54) **Tool holding devices for machine tools.**

(57) A tool holding device is particularly for N.C. machine tools and enables tool holders to be used with a range of machine tools of different kinds.

The device includes an adaptor 20 having a longitudinal opening with a seating 21 of part-conical form. A tool holder 10 is combined with the adaptor 20 and has an external part-conical portion 11 which fits in the adaptor opening.

The part-conical portion 11 of the holder 10 has a threaded bore 12 and a connection member 32 is located through the opening 23 in the adaptor 20 in the bore 12 to hold the tool holder in the adaptor.

Interengaging parts 15, 30 between the holder 10 and the adaptor 20 prevent relative rotation during use.

FIG.1

FIG.2

Tool Holding Devices for Machine Tools.

This invention relates to tool holding devices for machine tools, in particular but not exclusively, for machine tools of the kind known as N.C. machine tools.

N.C. machine tools have evolved to the stage at which several standards exist for the means for automatically grasping the tool holders during the transfer of the holders between a position on the machine tool and a storage position. Thus different tool holders are required for machines incorporating a different standard. Moreover the tool holders are each constructed to hold a different kind of tool. Accordingly in a situation in which two or more machine tools are operated which are of different standard tool holder constructions a large range of tool holders may need to be stocked, each of considerable cost, in order to be able to perform a range of machining operations with the machine tool.

Although attempts have been made to rationalise on the range of tool holders required these have not been satisfactory from a cost or performance point of view.

An object of the invention is to provide a tool holding device for machine tools which is simple yet satisfactory in performance.

According to the invention a tool holding device for machine tools comprises, in combination, an adaptor or shell member having a longitudinal opening a seating portion of which is of part-conical form, a tool holding member having an externally part-conical portion at one end engageable to fit into the seating portion of the shell member, the part-conical portion of the tool holding member including a longitudinal threaded bore, and a connection member locatable through the opening in the shell member to engage with the threaded bore in the tool holding member, whereby the connection member secures the tool holding member in the shell member with the part-conical portions seating together, the shell member and the tool holding member being formed with interengaging parts to prevent relative rotation between the members when assembled.

The connection member normally extends out of the opening in the shell member in a direction away from the tool member so that the protruding end of the connection member may be coupled to means incorporated in the machine tool for securing the device in an operative position on the tool.

Moreover the tool holding member will usually include means by which the member may be loaded with a tool for effecting a drilling, grinding or other operations. The tool is usually releasably mounted on the member and often a range of tools, for example of different sizes, may selectively be mounted on the tool holding member.

Preferably the interengaging parts for preventing relative rotation of the tool holding member and the shell member include circumferentially spaced lugs on one member which engage with corresponding openings on the other member.

The shell member will normally include means, for example a circumferential groove, whereby the assembled device is grasped for transfer between a storage and an operative position by a transfer mechanism associated with the machine tool.

Further features of the invention will appear from the following description of an embodiment of the invention given by way of example only and with reference to the drawings, in which:-

Fig. 1 is a side elevation of a tool holding member,

Fig. 2 is an end view of the member of Fig. 1,

Fig. 3 is a side elevation of a shell member,

Fig. 4 is an end view of the member of Fig. 3, and

Fig. 5 is a side elevation of a connecting member for connecting the members of Figs. 1 and 2 and Figs. 3 and 4.

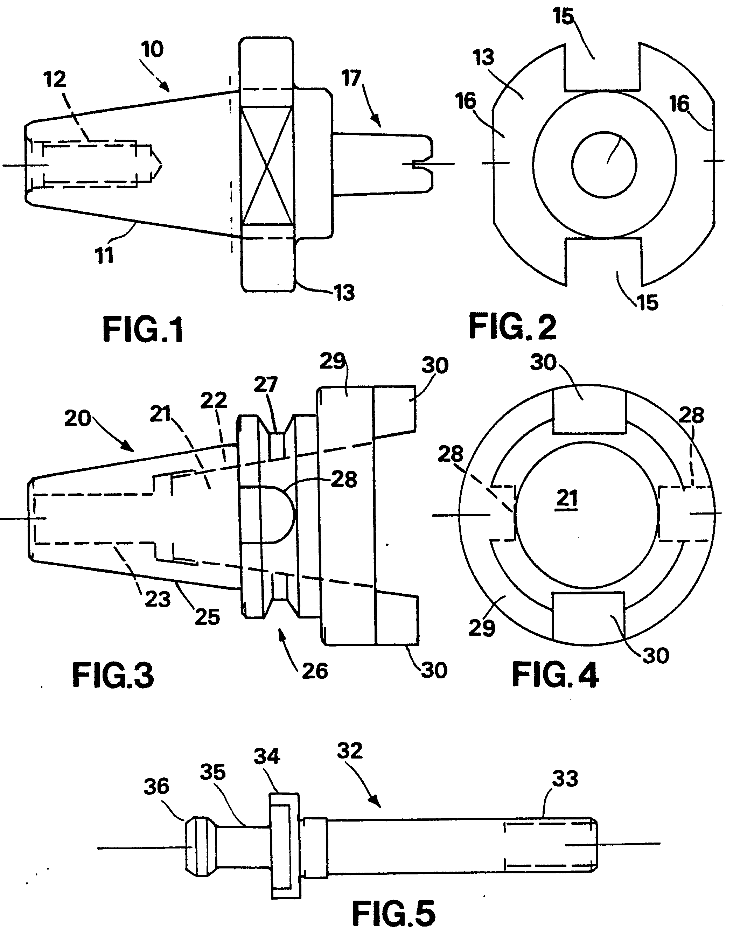

Referring to the drawings and firstly to Figs. 1 and 2 a tool holder member 10 is formed at one end with a generally part-conical portion 11 having a central threaded bore 12. A generally circular flange 13 is provided intermediate the ends of the member 10 and the flange 13 is formed with cut-outs 15 at opposite sides. Diametrically opposite flattened portions 16 of the flange are displaced at a right angle from the cut outs 15 about the axis.

The member 10 is formed at its end opposite the conical portion 11 with a tool holding device 17 which may take any desired form depending on the tool (not shown) to be located.

Referring now to Figs. 3 and 4 an adapter or shell member 20 is shown which, in use, is assembled with the member 10. The shell member 20 includes a central longitudinal opening 21, a portion 22 of which is of part-conical form. The taper of the portion 22 corresponds to the taper of the portion 11 of the holder member 10 and is an "international", non-stick taper.

Another portion 23 of the opening is of cylindrical shape and, surrounding the portion 23 and the narrower end of the portion 21, the member 20 is externally of part-conical form, as at 25, for location in the seating of a machine tool (not shown) in known manner.

Adjacent the part-conical portion 25 and intermediate the ends of the member 20 is formed an external shape 26, including a groove 27 and recesses 28, of known form for location of the member on the transfer mechanism of a machine tool. The shape 26 may take different forms to that shown depending on which of the various standards for the transfer mechanism is employed on the machine tool to be used.

At the end of the shell member 20 remote from the tapered portion 25 is a flange 29 from which extends in the axial direction a pair of diametrically-opposed lugs 30. The lugs 30 are arranged to engage in cut-outs 15 of the tool holder member 10.

The other part of the tool holding system is shown
in Fig. 5.   A connecting member or pull stud 32
is of circular cross-section and has a threaded
portion 33 at one end which is arranged for threaded
engagement with the threaded bore 12 of the tool
holder member 10.

The pull stud 32 also includes a circumferential
flange 34 which abuts against the end of the shell
member 20 when assembled.  In the illustrated stud,
which is arranged for use with machine tools which
lock a tool holder by engagement with a longitudinal
groove, such a groove is provided at 35 and the stud
also has a headed end 36.   Alternatively, in the
case in which a threaded draw-bar system is employed,
the end of the stud remote from the threaded portion
33 may be provided with a threaded bore engageable
with the draw bar.

In use of the tool holding system, the shell member 20
is selected according to the kind of machine tool
to be employed but, whichever shell member is used,
any tool holder member 10 is able to be assembled
with the shell member 20 and the member 10 is not
specific to the particular machine tool.   The tool
member 10 to be used is selected simply on the basis
of the operation to be performed and the working tool
to be used.  The selected member 10 is inserted
with its portion 11 into the opening 21 against the
portion 22 of the opening.   The stud member 32 is
then inserted through the cylindrical portion 23 of
the opening 21 until the threaded portion 33 engages
with the threaded opening 12 of the member 10.   The
member 32 is rotated until the portion 11 of the member 10 is firmly seated in the shell member 20 and the lugs 30 are located in the cut-outs 15.

The assembled tool holder system is then located on the machine tool storage system for selection and transfer to the machine tool drive arrangement in the case of an N.C. machine tool. Alternatively the system can be located directly in the drive arrangement. In either case the part-conical surface 25 seats in the correspondingly-shaped opening in the machine tool and the draw bar or other locking means locks the assembly in a driving position in the machine tool and is ready for use.

By accurate forming of the mating portions 11 and 22 of the members 10 and 20 the system is able to perform accurate work despite the three part construction of the system. More importantly the system enables a relatively small number of tool holding members to be stocked even though the range of machine tools would normally require a full range of tool holders for each machine tool.

Claims

1.  A tool holding device for machine tools comprises, in combination, an adaptor or shell member 20 having a longitudinal opening a seating portion 21 of which is of part-conical form 22, a tool holding member 10 having an externally part-conical portion 11 at one end engageable to fit into the seating portion 21 of the shell member 20, the part-conical portion 11 of the tool holding member 10 including a longitudinal threaded bore 12, and a connection member 32 locatable through the opening 23 in the shell member 20 to threadingly engage with the threaded bore 12 in the tool holding member, whereby the connection member 32 secures the tool holding member 10 in the shell member 20 with the part-conical portions 11, 22 seating together, the shell member 20 and the tool holding member 10 being formed with interengaging parts 15, 30 to prevent relative rotation between the members 10 and 20 when assembled.

2.  A device according to claim 1 wherein the connection member 32 extends out of the opening 23 in the shell member 20 in a direction away from the tool member 10 so that the protruding end 34, 35, 36 of the connection member 32 is able to be coupled to means incorporated in the machine tool for securing the device in an operative position on the tool.

3.  A device according to claim 1 or 2 wherein the tool holding member 10 includes attachment means 17 by which the member may be loaded with a tool for effecting a drilling, grinding or other operations.

4. A device according to any one of the preceding claims wherein the interengaging parts 15, 30 for preventing relative rotation of the tool holding member 10 and the shell member 20 include circumferentially spaced lugs 30 on one member which engage with corresponding openings 15 on the other member.

5. A device according to any one of the preceding claims wherein the shell member includes mounting means 26, 27, 28 whereby the assembled device is grasped for transfer between a storage and an operative position by a transfer mechanism associated with the machine tool.

FIG.1

FIG.2

FIG.3

FIG.4

FIG.5